# EUROPEAN PATENT APPLICATION

(11) **EP 2 219 120 A1**
(43) Date of publication of application: **18.08.2010**
(21) Application number: 10152804.0
(22) Date of filing: 05.02.2010
(51) Int. Cl.: G06F 17/30

(54) **Method and system for exchanging digital documents**

(30) Priority: 17.02.2009 IT TV20090017
(71) Applicant: B + B Holding S.r.l., 31044 Montebelluna (TV) (IT)
(72) Inventor: Basso, Enrico, 31054, POSSAGNO TV (IT)
(74) Representative: Parolin, Davide

(57) **Abstract**

A device for transmitting digital documents, comprising means for receiving a transfer file (120), which in turn comprises a document body (130) and a header (140) that identifies the sender (1) and the recipient (2), the transfer file (120) being encoded in a first digital format; a selector module (5), which is adapted to identify, on the basis of the header (140), a second digital format associated with the recipient (2); a connector module (6), which is adapted to convert the transfer file (120) from the first format to the second format and to send the converted transfer file (120') to the recipient (2).

## Description

The present invention relates to a method and a system for exchanging digital documents.

Currently, every organization produces, stores and manages documents that in most cases originate from computers. In recent years, many programs and procedures for receiving and transmitting documents directly in electronic format have been developed, so as to facilitate their exchange and improve the productivity and efficiency linked to the everyday management of documents.

In particular, for managing adequately the integration among different companies, Electronic Data Interchange solutions have been developed. The expression Electronic Data Interchange, more commonly referred to as "EDI", is used to designate a technology that is widely used for the automated exchange of documents among applications of different types. Thanks to EDI technology, companies can exchange purchase orders, invoices, dispatch notices and other company documents directly from one company system to the other, without any human intervention. Among the main advantages of such technology there are a reduced quantity of errors and the reduction of the administrative costs of large companies.

The communication protocols conventionally used, however, require the usage of specific modules to support the communication, require dedicated lines and most of all require all the parties involved in the exchange of documents to adopt a common format standard. In practice, because of the high costs of implementation and use, such systems are in fact justified only in large business groups characterized by a considerable amount of information exchange.

Up to now, two companies that do not use a common communication protocol and want to electronically exchange a document in an automatic manner must necessarily apply to their electronic document management systems a modification capable of managing the format conversion before the sending and/or after the receiving. This involves various problems, because of the costs and time needed to make the modifications and because the same need for modification can occur several times, for example in the case of a new partner in the communication whose systems use a different format.

The aim of the present invention is to overcome the limitations of the background art pointed out above, by proposing a new method and system for exchanging electronic documents.

Within this aim, an object of the present invention is to provide a method and a system for exchanging electronic documents capable of making the document format transparent between the sender and the recipient.

This aim, as well as this and other objects that will become better apparent hereinafter, are achieved by a device for transmitting digital documents which comprises means for receiving a transfer file, which in turn comprises a document body and a header that identifies the sender and the recipient, said transfer file being encoded in a first digital format; a selector module, which is adapted to identify, on the basis of said header, a second digital format associated with said recipient; a connector module, which is adapted to convert said transfer file from said first format to said second format and to send said converted transfer file to said recipient.

This aim, as well as this and other objects, are also achieved by a method for transmitting digital documents, comprising the steps that consist in receiving a transfer file, which comprises a document body and a header that identifies the sender and the recipient, said transfer file being encoded in a first digital format; identifying, on the basis of said header, a second digital format associated with said recipient; converting said transfer file from said first format to said second format and sending said converted transfer file to said recipient.

The transfer file can be sent in encrypted and/or compressed form.

Preferably, the transfer file can be sent to the recipient via mail connections, ftp connections, connections of the WebService type, connections based on fixed telephony, for example FAX, or mobile telephone, for example via SMS or MMS.

Further characteristics and advantages of the present invention will become better apparent from the following detailed description, given by way of non-limiting example and accompanied by the corresponding drawings, wherein:
Figure 1 is a block diagram of the system according to the present invention;
Figure 2 is a block diagram of the structure of the transfer file created by the sender's computer according to the present invention;
Figure 3 is a block diagram of the structure of the transfer file received by the recipient's computer and of its conversion for use by the recipient according to the present invention;
Figure 4 is a flowchart of the operation of system according to the present invention.

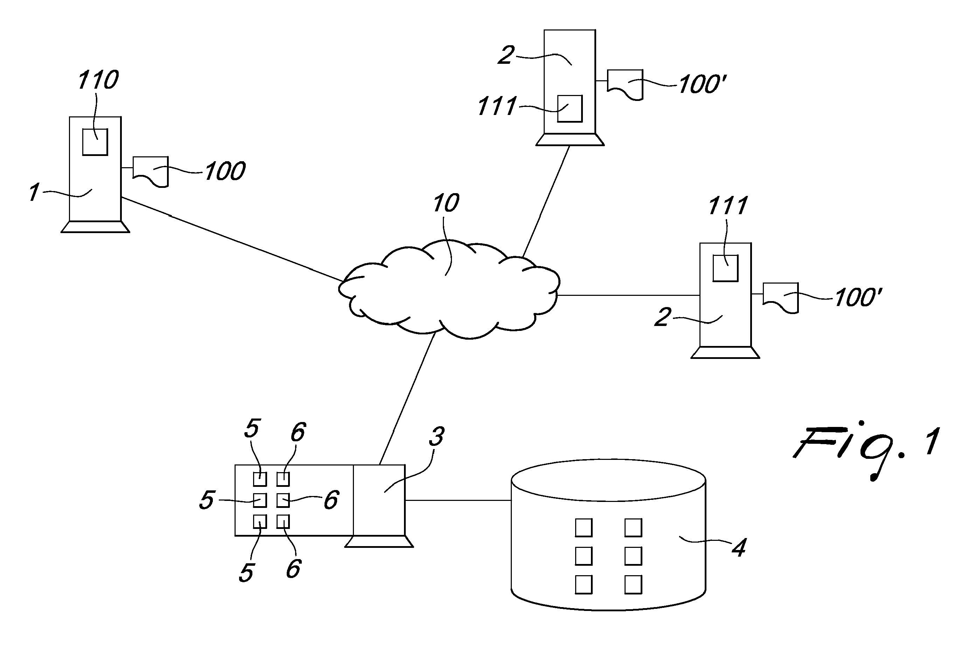

An exemplifying architecture of the system according to the present invention is summarized in the block diagram of Figure 1.

The figure shows a plurality of electronic computers 1, 2 and a central server 3. The electronic computers 1, 2 represent electronic computers of different companies, or even of different departments of a same company, that need to exchange data in electronic format with each other.

Each one of the computers 1, 2 uses a data format of its own, which can be different from the data format used by the other computers.

The computers 1, 2 are equivalent from a functional viewpoint.

However, for the sake of clarity of presentation, the present description distinguishes between the sender computer 1 and the recipient computers 2, assuming that each one of the recipient computers 2 must receive a document 100 sent by the sender computer.

It is straightforward to understand that the operation of the system can be bidirectional and that the computers 2 as well may be capable of sending documents and likewise the computer 1 may be capable of receiving them.

Moreover, Figure 1 is a view of a packing module 110 inside the sender computer 1, and of an unpacking module 111 inside the recipient computers 2.

The packing module 110 can comprise a compression module and an encryption module and, conversely, the unpacking module can comprise a decompression module and a decryption module.

The compression and decompression modules are substantially programmed to perform compression and decompression of the lossless type, by using known methods, such as for example arithmetic coding, entropy coding, Huffman coding, predictive coding, universal coding, Ziv-Lempel coding or any other coding, even proprietary coding, that makes it possible to obtain a size reduction of the document to be exchanged without data loss.

The encryption and decryption modules preferably adopt private-key symmetric coding algorithms, such as DES, IDEA, 3DES, RC2.

However, the person skilled in the art understands without any effort that similar results can be achieved with asymmetric encryption algorithms.

Moreover, Figure 1 is a view of a database 4, which is connected to the central server 3 or is included inside it.

The database 4 comprises documents in transit from one computer to another; the server 3 comprises a plurality of selector modules 5 and of connector modules 6.

The computers 1, 2 and 3 are interconnected via a computer network 10, which in a preferred embodiment is the Internet.

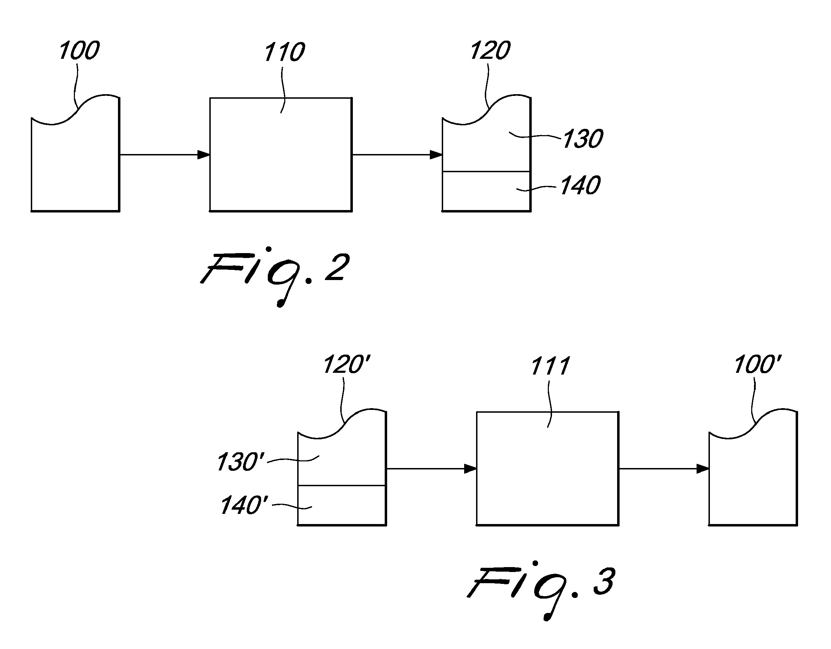

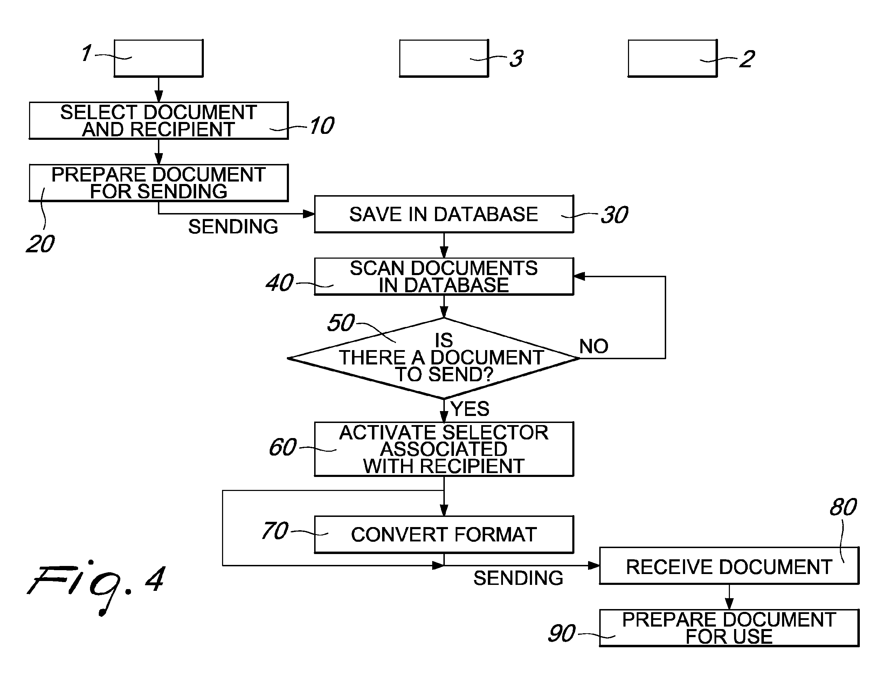

The operation of the system according to the invention is now described with reference to the flowchart of Figure 4 and to the further Figures 2 and 3, which will be described in detail hereafter.

In step 10, the electronic computer 1, activated by the sender, selects a digital document 100 to be sent and a recipient 2, selected by the user, whose identifying data are known to the sender.

In step 20, the packing module 110 takes the document 100 and processes it, encrypting and optionally also compressing its content, in order to obtain a data set 130, which corresponds, in processed form, to the original document 100.

Moreover, a header section 140 that contains the data of the sender and of the recipient is added to the data set 130.

The combination of the data set 130 and of the header 140 constitutes a transfer file or message 120, which, thus prepared, is sent to the central server 3. The message 120 is sent to the central server preferably via a mail connection, an ftp connection or a WebService connection.

The expression "mail connection" refers to any communication channel which is adapted to transport e-mail messages in a conventional manner, for example a communication channel that operates via an SMTP protocol.

Likewise, the expression "ftp connection" refers to a communication channel which is adapted to operate according to the ftp or ftps protocol, as known in the art.

The expression "connection of the WebService type" refers to communication as defined by the World Wide Web Consortium (W3C), i.e., as interaction between machines with invocation of remote services or functions via a data communications network, for example by using Web APIs (Application Programming Interfaces), which can be used to execute function calls which are made available on a machine located in another point of the network.

In step 30, the message received by the central server 3 is saved in the database 4 without the need to perform any modification.

A transmission module operating on the server 3 recovers the information related to the sender 1 and to the recipient 2, extracting it from the header section 140 of the received message, so as to update an internal list of documents waiting to be forwarded to a destination computer 2.

In step 40, a control module that resides in the central service 3 scans the database 4 to detect whether there are documents 120 to be forwarded to the respective recipients 2.

If there are none, in step 50 the control module continues to perform the scan until it determines the presence of a message to be forwarded.

In step 60, the control module selects a document 120 to be sent and activates a selector module 5 associated with the recipient specified in the header 140, which is adapted to identify the digital format that must be used to send the transfer file to the recipient 2.

The selector module 5 sends this information to a connector module 6, which if necessary, in step 70, performs a format conversion and converts the transfer file 120 into a converted transfer file 120'. Of course, the format conversion or translation operations can be provided by means of a separate module.

The transfer file, possibly converted, is then sent to the recipient computer 2, which receives it in step 80.

In step 90, the recipient computer 2 removes the header 140 and decompresses and decrypts the received message, thus reconstructing the original document 100', which is substantially identical to the document 100, except for any format conversion.

At this point the recipient can use the document 100'.

Figure 2 is a view of a detail of the conversion applied to a digital document 100 inside the sender computer 1 before digital document is sent to the central server 3.

In particular, the figure shows a document 100, a packing module 110, preferably provided with functions for encrypting and compressing the document, and a transfer file 120 ready for transmission to the central server 3, in which a section 130 is shown, which comprises the document body 100 and a header 140 section, which comprises auxiliary data, such as data of the sender and of the recipient.

With reference now to Figure 3, the conversion applied to a document 120', which is received by the recipient's computer 2, is described in detail.

The document 120' is composed of a document body 130', which is encrypted and preferably compressed and corresponds to the body of the document 130 sent by the sender 1, possibly after a format conversion performed by the connector 6, and of a header 140, which is applied by the sender's computer 1.

The document 120' is supplied in input to an unpacking module 111, which decompresses the document if it is compressed, decrypts it and removes its header 140'.

The document 100', which corresponds to the document 100 except for possible format conversion, is the result of these operations.

In practice it has been found that the described method and system achieve the intended aim and object.

In particular, it has been shown that the method thus conceived makes it possible to overcome the qualitative limitations of the background art due to the fact that it allows the exchange of electronic documents without the need to agree on a common format; both the sender and the recipient work with the formats that are familiar to them, and the fact that a possible format conversion is performed during sending is completely transparent to them.

Obviously, numerous modifications will be clear and can be promptly performed by the person skilled in the art without abandoning the protective scope of the appended claims.

The protective scope of the claims must not be limited by the figures or by the preferred embodiments illustrated in the description by way of example, but rather the claims must comprise all the patentable novelty characteristics that reside in the present invention, including all the characteristics that would be treated as equivalent by the person skilled in the art.

The disclosures in Italian Patent Application No. TV2009A000017 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for transmitting digital documents, comprising:
- means for receiving a transfer file (120) comprising a document body (130) and a header (140) that identifies the sender (1) and the recipient (2), said transfer file (120) being encoded in a first digital format;
- a selector module (5), which is adapted to identify, on the basis of said header (140), a second digital format associated with said recipient (2);
- a connector module (6), which is adapted to convert said transfer file (120) from said first format to said second format and to send said converted transfer file (120') to said recipient (2).

2. The device according to claim 1, **characterized in that** said transfer file (120) or said digital document body (130) is in encrypted and compressed form.

3. The device according to one or more of the preceding claims, **characterized in that** said means for receiving a transfer file (120) are configured to operate via the Internet (10).

4. The device according to one or more of the preceding claims, **characterized in that** said connector (6) is configured to send said converted transfer file (120') to said recipient (2) via the Internet (10).

5. The device according to one or more of the preceding claims, **characterized in that** said means for receiving a transfer file (120) are configured to operate via one or more connections selected from the group comprising mail connections, ftp, WebService, FAX, SMS and MMS.

6. The device according to one or more of the preceding claims, **characterized in that** said connector (6) is configured to send said transfer file (120') to said recipient (2) via one or more connections selected from the group comprising mail connections, ftp, WebService, FAX, SMS and MMS.

7. A system for transferring a digital document (100) from a sender computer (1) to a recipient computer (2), comprising:
- a device for transmitting digital documents according to one or more of the preceding claims;
- a packing module (110), which is located at said sender computer (1) and is configured to convert a digital document (100) into said transfer file (120) comprising the body (130) of the digital document (100) and a header (140);
- an unpacking module (111) located at said recipient computer (2) and configured to recreate the digital document (100') or an equivalent copy thereof starting from the converted transfer file (120').

8. The system according to claim 7, **characterized in that** said packing module (110) comprises a compression module and/or an encryption module.

9. The system according to claim 8, **characterized in that** said unpacking module (111) comprises respectively a decompression module and/or a decryption module.

10. A method for transmitting digital documents (100), comprising the steps that consist in:
- receiving a transfer file (120), which comprises a document body (130) and a header (140) that identifies the sender (1) and the recipient (2), said transfer file (120) being encoded in a first digital format;
- identifying, on the basis of said header (140), a second digital format associated with said recipient (2);
- converting said transfer file (120) from said first format to said second format and sending said converted transfer file (120') to said recipient (2).
